(19) Europäisches Patentamt
European Patent Office
Office européen des brevets

(11) Veröffentlichungsnummer: **0 026 913**
**B1**

# (12) EUROPÄISCHE PATENTSCHRIFT

(45) Veröffentlichungstag der Patentschrift: **12.01.83**

(51) Int. Cl.³: **C 09 B 62/095,** C 09 B 62/515, D 06 P 3/66, D 06 P 3/10

(21) Anmeldenummer: **80105931.2**

(22) Anmeldetag: **01.10.80**

(54) **Kupferkomplex-Naphthylazonaphthyl-Verbindungen, Verfahren zu ihrer Herstellung und ihre Verwendung zum Färben und Bedrucken von Fasermaterialien und Leder.**

(30) Priorität: **09.10.79 DE 2940835**

(43) Veröffentlichungstag der Anmeldung: **15.04.81 Patentblatt 81/15**

(45) Bekanntmachung des Hinweises auf die Patenterteilung: **12.01.83 Patentblatt 83/2**

(84) Benannte Vertragsstaaten: **CH DE FR GB IT LI**

(56) Entgegenhaltungen:
**DE-B-1 265 698**
**FR-A-2 084 040**
**US-A-3 455 897**

(73) Patentinhaber: **HOECHST AKTIENGESELLSCHAFT, Postfach 80 03 20, D-6230 Frankfurt/Main 80 (DE)**

(72) Erfinder: **Meininger, Fritz, Dr., Loreleistrasse 7, D-6230 Frankfurt am Main 80 (DE)**
Erfinder: **Schläfer, Ludwig, Dr., Zum Gimbacher Hof 9A, D-6233 Kelkheim (Taunus) (DE)**

**EP 0 026 913 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Kupferkomplex-Naphthylazonaphthyl-Verbindungen, Verfahren zu ihrer Herstellung und ihre Verwendung zum Färben und Bedrucken von Fasermaterialien und Leder

Die vorliegende Erfindung liegt auf dem technischen Gebiet der Azofarbstoffe.

Die Erfindung betrifft neue Kupferkomplex-Azoverbindungen, die, in Form der freien Säure geschrieben, die allgemeine Formel (1)

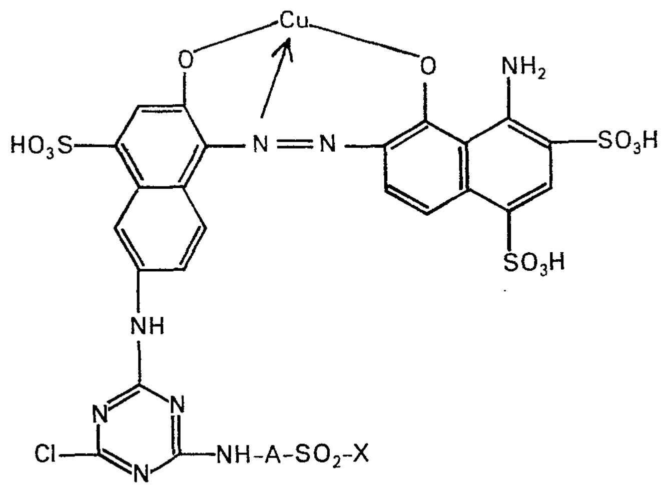

(1)

besitzen. In dieser Formel (1) bedeuten:

A den Phenylenrest, der durch 1, 2 oder 3 Substituenten aus der Gruppe Alkyl von 1-4 C-Atomen, Alkoxy von 1-4 C-Atomen, Chlor und Brom substituiert sein kann, oder den Naphthylenrest, der durch 1, 2 oder 3 Sulfonsäuregruppen substituiert sein kann;

X den Rest der Formel (2a) oder (2b)

$-CH{=}CH_2$ (2a)

$-CH_2-CH_2-Y$ (2b),

in welcher Y eine alkalisch eliminierbare Gruppe bedeutet.

Alkalisch eliminierbare Gruppen Y sind beispielsweise Halogenatome, wie das Chlor- und Bromatom, Estergruppen organischer Carbon- und Sulfonsäuren, wie ein niederer Alkanoyloxyrest, beispielsweise der Acetyloxyrest, oder ein Benzoyloxy- oder Benzolsulfonyloxyrest, des weiteren beispielsweise die sauren Estergruppen der Phosphorsäure oder der Schwefelsäure entsprechend den Formeln, in Form der freien Säure geschrieben, $-OPO_3H_2$ bzw. $-OSO_3H$.

Die neuen Azoverbindungen können sowohl in Form der freien Säure als auch in Form ihrer Salze vorliegen. Bevorzugt sind sie in Form der Salze, insbesondere der Alkali- und Erdalkalimetallsalze, hiervon insbesondere die Natrium-, Kalium- und auch Calciumsalze. Die neuen Azoverbindungen finden bevorzugt in Form der Alkalimetallsalze Verwendung zum Färben und Bedrucken von Fasermaterialien und Leder.

Technisch besonders interessante Vertreter der Azoverbindungen der allgemeinen Formel (1) sind solche, in welcher der Formelrest A den Phenylenrest bedeutet, der durch ein Chlor- oder Bromatom oder durch eine Methyl-, Äthyl-, Methoxy- oder Äthoxygruppe substituiert sein kann oder der durch zwei Substituenten aus der Gruppe Chlor, Brom, Methyl, Äthyl, Methoxy und Äthoxy substituiert sein kann.

Als Formelrest A können insbesondere die Reste der folgenden Formeln genannt werden:

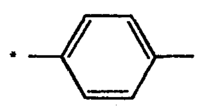,
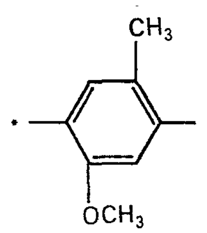,
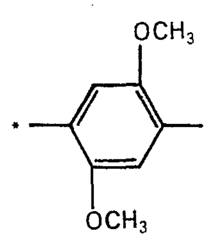,
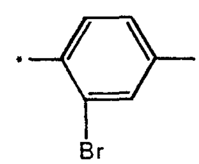,

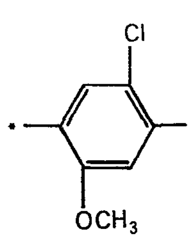,
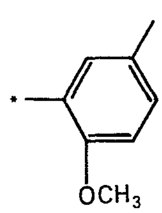,
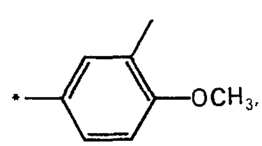
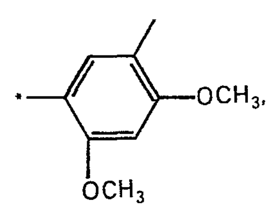

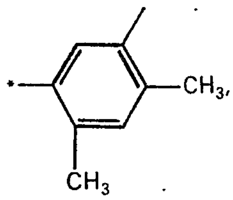, 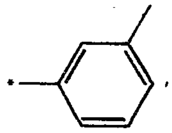, 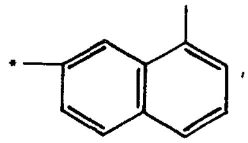, 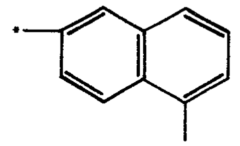,

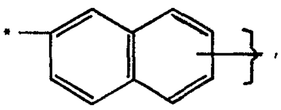, 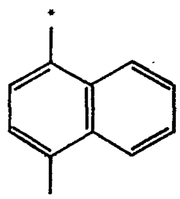, 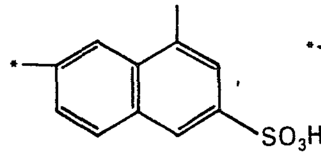, 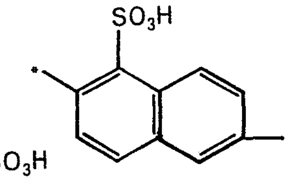

wobei die mit einem Stern gekennzeichnete Bindung diejenige Bindung ist, die zur NH-Gruppe am Triazinring führt.

Von den neuen erfindungsgemässen Azoverbindungen sind insbesondere diejenigen Kupferkomplex-Azoverbindungen hervorzuheben, in welchen der Formelrest A den ggf. substituierten Phenylenrest darstellt und in welchen der Formelrest X den β-Sulfatoäthyl-Rest oder den Vinylrest bedeutet.

Die vorliegende Erfindung betrifft weiterhin Verfahren zur Herstellung der neuen Verbindungen entsprechend der allgemeinen Formel (1). So kann man die neuen Verbindungen der allgemeinen Formel (1) erfindungsgemäss herstellen, indem man eine metallfreie Azoverbindung der Formel (3), in Form der freien Säure geschrieben,

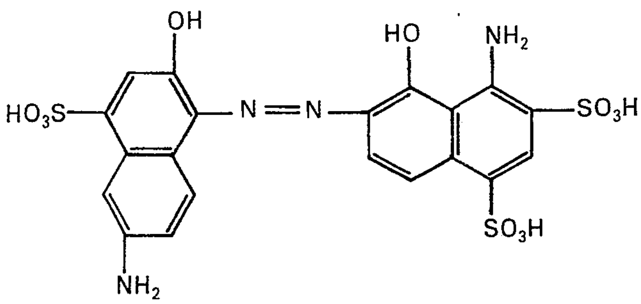

(3)

oder deren Kupferkomplexverbindung mit einer Dichlortriazin-Verbindung der allgemeinen Formel (4)

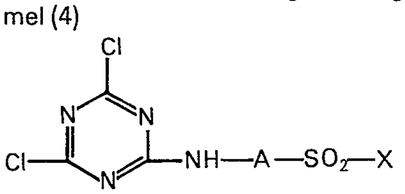

(4)

in welcher A und X die obengenannten Bedeutungen haben, in analoger Weise zu bekannten Reaktionen von aromatischen Aminen mit Chlortriazinen umsetzt und erforderlichenfalls die erhaltene metallfreie Verbindung mit einem kupferabgebenden Mittel in die Kupferkomplexverbindung der allgemeinen Formel (1) überführt.

Ein weiteres erfindungsgemässes Herstellungsverfahren ist die Umsetzung der metallfreien Azoverbindung der allgemeinen Formel (5), in Form der freien Säure geschrieben,

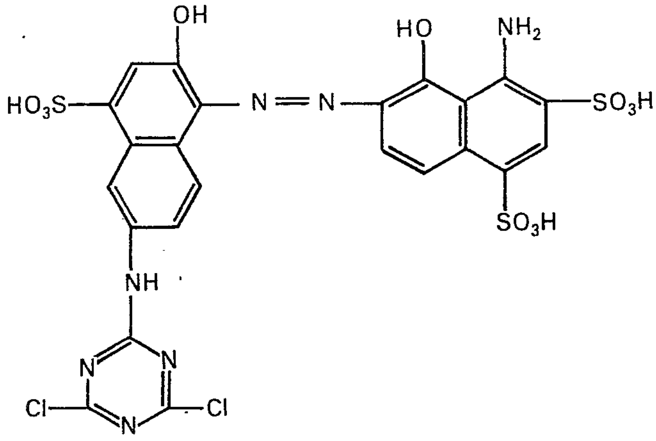

(5)

oder deren Kupferkomplexverbindung mit einem aromatischen Amin der allgemeinen Formel (6)

$H_2N-A-SO_2-X$ (6)

in welcher A und X die obengenannten Bedeutungen haben, wobei man erforderlichenfalls die erhaltene metallfreie Azoverbindung mit einem kupferabgebenden Mittel in die Kupferkomplex-Azoverbindung der allgemeinen Formel (1) überführt.

Die oben genannten Ausgangsverbindungen liegen je nach Reaktionsbedingungen in Form der Säure und/oder der Salze, bevorzugt Alkalisalze, vor oder werden in dieser Form eingesetzt.

Kupferabgebende Mittel sind beispielsweise Salze des Kupfers, wie z.B. Kupfersulfat, Kupferchlorid, Kupferfluorid, Kupferacetat, Kupferformiat und Kupfercarbonat.

Die Kupferkomplexbildung mit den kupferabgebenden Mitteln kann gegebenenfalls in Gegenwart eines säurebindenden Mittels und gegebenenfalls bei erhöhter Temperatur (die Metallisierung lässt sich generell bei 0-120°C durchführen) bis zur vollkommenen Umsetzung erfolgen. Als säurebindende Mittel dienen hierbei vorzugsweise Alkalimetallsalze schwacher anorganischer oder organischer Säuren, wie z.B. Natriumcarbonat, Natriumbicarbonat oder deren Kaliumsalze, primäres oder sekundäres Natriumphosphat oder Natriumacetat und Natriumformiat.

Die Umsetzung der metallfreien Azoverbindung der allgemeinen Formel (3) oder deren Kupferkomplexverbindung mit dem Säurechlorid der allgemeinen Formel (4), ebenso die Umsetzung der metallfreien Azoverbindung der allgemeinen Formel (5) oder deren Kupferkomplexverbindung mit einem aromatischen Amin der allgemeinen Formel (6), wird in wässrigem Medium bei einem pH-Wert von 3-7,5, bevorzugt nicht oberhalb 7, und bei einer Temperatur von −10°C bis +40°C durchgeführt.

Das erfindungsgemässe Verfahren zur Herstellung der Verbindungen der allgemeinen Formel (1) kann beispielsweise so durchgeführt werden, dass man die Verbindung der allgemeinen Formel (3), vorzugsweise als Alkalimetallsalz, in wässriger Lösung mit der äquimolaren bis 1,5fach molaren Menge einer Verbindung der allgemeinen Formel (4) mehrere Stunden lang bei einer Temperatur von −10°C bis +10°C und bei einem pH-Wert von 3 bis 5 rührt, wobei gegen Ende der Reaktion ein pH-Wert von 6 bis 7 eingestellt wird. Sodann wird das Reaktionsgemisch mit der stöchiometrischen Menge eines Kupfersalzes versetzt und bei einer Temperatur zwischen 20 bis 80°C 15 Minuten bis zwei Stunden verrührt. – Man kann auch in gleicher Weise so verfahren, dass man die metallfreie Verbindung der allgemeinen Formel (3) gemäss den obigen Bedingungen zuerst mit dem Kupfersalz umsetzt und die so hergestellte Kupferkomplexverbindung anschliessend unter den oben angegebenen Verfahrensbedingungen mit der Dichlor-triazin-Verbindung der allgemeinen Formel (4) reagieren lässt. – Weiterhin kann man gemäss der anfangs genannten erfindungsgemässen zweiten Verfahrensweise der Umsetzung der Verbindung der allgemeinen Formel (5) mit einer Verbindung der allgemeinen Formel (6) so verfahren, dass beide Verbindungen in äquimolarer Menge in wässriger Lösung bei einem pH-Wert von 5 bis 7, der mittels eines säurebindenden Mittels, wie Natriumcarbonat oder Natriumacetat eingestellt und gehalten wird, und bei einer Temperatur von 10 bis 30°C miteinander einige Stunden verrührt. Die nachfolgende Überführung in die Kupferkomplexverbindung mit der stöchiometrischen Menge eines Kupfersalzes kann gemäss den oben angegebenen Bedingungen erfolgen. Setzt man die Kupferkomplexverbindung entsprechend der Verbindung der allgemeinen Formel (5) ein, so kann die Umsetzung mit dem aromatischen Amin der allgemeinen Formel (6) in entsprechender Weise bei einem pH-Wert von 5 bis 7 und bei einer Temperatur von 10 bis 30°C erfolgen.

Die Ausgangsverbindung der allgemeinen Formel (3) und deren Kupferkomplexverbindung lässt sich herstellen, indem man 6-Nitro-1-diazo-2-hydroxy-naphthalin-4-sulfonsäure oder das entsprechende Diazoxid mit 1-Amino-8-naphthol-2,4-disulfonsäure alkalisch kuppelt und die erhaltene Dihydroxy-Azoverbindung nach Reduktion der Nitrogruppe zur Aminogruppe mit einem kupferabgebenden Mittel in die Kupferkomplexverbindung überführt. Die Ausgangsverbindung der allgemeinen Formel (5) oder deren Kupferkomplexverbindung kann durch Umsetzung der obengenannten Verbindung der allgemeinen Formel (3) oder deren Kupferkomplexverbindung mit der einfach-molaren Menge an Trichlortriazin bei einer Temperatur von −10°C bis +30°C und bei einem pH-Wert von 3 bis 7 in wässrigem Medium hergestellt werden. Die Ausgangsverbindungen der allgemeinen Formel (4) sind aus der DE-PS 1 265 689, die der allgemeinen Formel (5) sind aus BE-PS 596 941 bekannt.

Die Abscheidung der erfindungsgemäss hergestellten Verbindungen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung.

Die neuen erfindungsgemässen Verbindungen haben faserreaktive Eigenschaften und besitzen sehr gute Farbstoffeigenschaften zum Färben (einschliesslich Bedrucken) von Materialien aus Cellulosefasern, von natürlichen oder synthetischen Polyamidfasern, von Polyurethanfasern und von Leder.

Gegenstand der vorliegenden Erfindung ist deshalb auch die Verwendung der erfindungsgemässen Kupferkomplexazoverbindungen der allgemeinen Formel (1) zum Färben und Bedrucken von Cellulose-, Polyamid- und Polyurethanfasermaterialien sowie von Leder bzw. Verfahren zu deren Anwendung auf diesen Substraten.

Unter Cellulosefasermaterialien werden vorzugsweise Baumwolle und regenerierte Cellulose, aber auch andere Pflanzenfasern, wie Leinen, Hanf, Jute, verstanden. Unter Polyamidfasern sind sowohl solche nativen als auch solche synthetischen Ursprungs zu verstehen, wie Wolle und andere Tierhaare, Seide, Polyamid-6.6, Polyamid-6, Polyamid-11 oder Polyamid-4.

Da die erfindungsgemässen Verbindungen faserreaktive Eigenschaften besitzen, lassen sie sich auf den genannten Substraten nach den für Reaktivfarbstoffe bekannten Anwendungstechniken applizieren und fixieren.

So erhält man mit ihnen auf Cellulosefasern nach dem Ausziehverfahren aus langer Flotte unter Verwendung der verschiedensten Alkalizusätze sehr gute Farbausbeuten.

Nach dem Klotzverfahren werden auf Cellulosefasern ebenfalls ausgezeichnete Farbausbeuten erhalten, wobei durch Verweilen bei Raumtemperatur, durch Dämpfen oder mit Trockenhitze fixiert werden kann.

Ebenfalls nach den üblichen Druckverfahren für Cellulosefasern, die beispielsweise entweder einphasig in Anwesenheit von Natriumbicarbonat oder anderer säurebindender Mittel in der Druckfarbe und anschliessendem Dämpfen bei 101-103°C oder aber zweiphasig unter Bedrucken mit neutraler oder schwach saurer Druckfarbe und anschliessender Fixierung der bedruckten Ware beispielsweise durch Hindurchführen durch ein heisses elektrolythaltiges alkalisches Bad oder mittels Überklotzen mit einer alkalischen elektrolythaltigen Klotzflotte und anschliessendem Verweilen, Dämpfen oder Trokkenhitze durchgeführt werden können, erhält man farbstarke Drucke mit gutem Stand der Konturen und einem klaren Weissfond. Der Ausfall der Drucke ist von wechselnden Fixierbedingungen nur wenig abhängig. Sowohl in der Färberei als auch in der Druckerei sind die mit den erfindungsgemässen Farbstoffen erhaltenen Fixiergrade aussergewöhnlich hoch.

Für das coloristische Verhalten der erfindungsgemässen Farbstoffe ist besonders hervorzuheben, dass sie sich durch gute Stabilität in Druckpasten und Klotzflotten, auch in Anwesenheit von Alkali, durch ein sehr gutes Ziehvermögen aus langer Flotte, durch guten Farbaufbau nach den üblichen Färbe- und Druckverfahren, durch eine gleiche Farbtiefe beim Färben auf Baumwolle und Regeneratcellulosefasern, durch ein egales Warenbild der mit ihnen hergestellten Färbungen und Drucke und ebenfalls durch einen gleichmässigen Ausfall der Färbungen aus langer Flotte bei Zugabe verschiedener Mengen an Elektrolyten, wie Natriumsulfat oder Natriumchlorid, auszeichnen.

Die mit den neuen Farbstoffen erhaltenen Färbungen und Drucke zeichnen sich durch hohe Farbstärke und hohe Brillanz aus. Gleichfalls sind die hohen Echtheiten der mit den neuen Farbstoffen erhaltenen Färbungen und Drucke, insbesondere der auf Cellulosefasern, zu erwähnen. Dies gilt gleichwohl für die wichtigsten Fabrikations- und Gebrauchsechtheiten. Besonders zu erwähnen sind die Lichtechtheit, die Nassechtheiten, wie Waschechtheiten, Walkechhtheiten, Wasserechtheit, sauren und alkalischen Schweissechtheiten, des weiteren die Bügelechtheit und Reibechtheit. Die Färbungen zeichnen sich darüberhinaus durch eine gute Ätzbarkeit aus.

Die Färbungen auf Polyamidfasern und Polyurethanfasern, ebenso auf Leder, werden in üblicher Weise aus saurem Milieu ausgeführt. So kann man beispielsweise dem Färbebad Essigsäure oder Essigsäure und Ammoniumacetat zufügen, um den gewünschten pH-Wert zu erhalten. Zwecks Erreichung einer brauchbaren Egalität der Färbungen empfiehlt sich ein Zusatz an üblichen Egalisierhilfsmitteln, beispielsweise auf Basis eines Umsetzungsproduktes von Cyanurchlorid mit der dreifach molaren Menge einer Aminobenzolsulfonsäure und/oder einer Aminonaphthalinsulfonsäure und/oder auf Basis eines Umsetzungsprodukes von beispielsweise Stearylamin mit Äthylenoxid. Die Färbungen können bei einer Temperatur von 60°C oder oberhalb von 60%C, so bei Siedetemperatur des wässrigen Bades, gegebenenfalls unter Druck bei Temperaturen bis zu 120°C, ausgeführt werden.

Die nachfolgenden Beispiele dienen zur Erläuterung der Erfindung. Die dort angegebenen Teile stellen Gewichtsteile dar, die Angaben über Prozente sind Gewichtsprozente, sofern nichts anderes vermerkt. Gewichtsteile verhalten sich zu Volumenteilen wie Kilogramm zu Liter.

Beispiel 1

93,2 Teile einer Verbindung der Formel

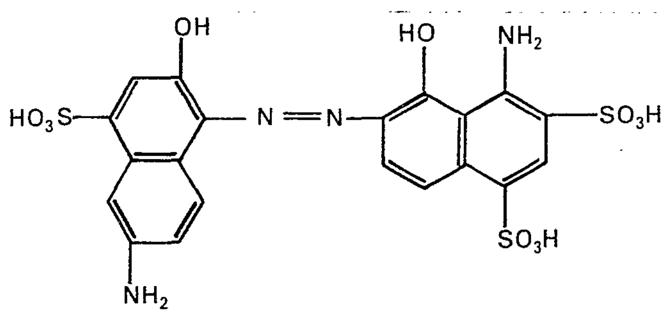

(in Form des Natriumsalzes; beispielsweise auch in Form eines feuchten sauren Presskuchens mit einem Gehalt von etwa 40% dieser Verbindung) werden in 600-700 Teile Wasser eingetragen; mit wässriger Natronlauge wird ein pH-Wert von 7 eingestellt. Unter gutem Rühren gibt man dieser

Lösung 60 Teile kristallines Natriumacetat hinzu und kühlt sie auf 0 bis 5°C ab. 103 Teile des Säurechlorids der Formel

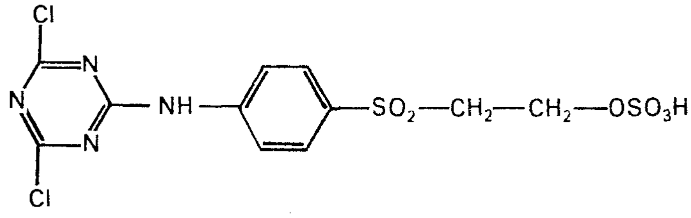

werden unter Rühren hinzugegeben. Das Reaktionsgemisch wird weiterhin 3 Stunden lang bei 0 bis 10°C, anschliessend etwa 12 Stunden lang bei Raumtemperatur weitergerührt. Im Verlauf der Acylierung fällt der pH-Wert des Reaktionsgemisches von 7 auf 5,5.

Zur Überführung der acylierten Verbindung in deren Kupferkomplexverbindung versetzt man die Reaktionslösung mit 95 Teilen kristallisiertem Kupfer(II)-sulfat, stellt den pH-Wert mit etwa 10 Teilen Natriumbicarbonat auf 5 und rührt 2 Stunden bei einem pH-Wert von 4,5-5. Das Reaktionsgemisch wird geklärt und unter reduziertem Druck bei 70-80°C zur Trockne eingedampft. Es wird ein elektrolythaltiges, blauschwarzes Pulver erhalten, das die faserreaktive Kupferkomplexverbindung der Formel

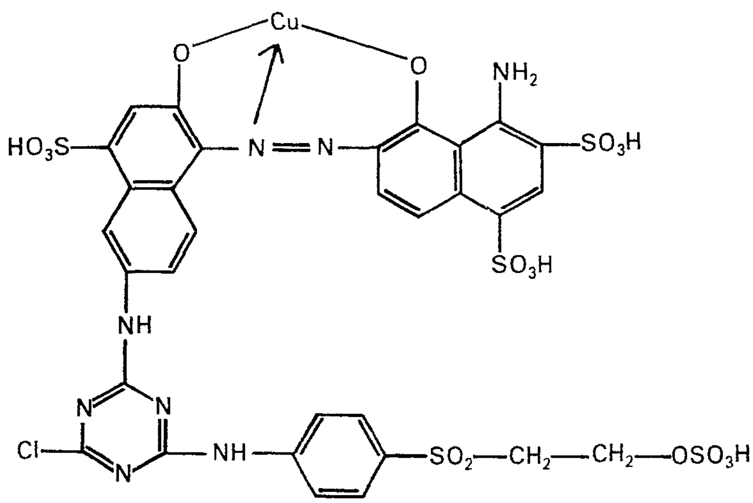

vorwiegend in Form des Natriumsalzes enthält. Ausbeute: ca. 90% d. Th.

Diese Verbindung eignet sich sehr gut zum Färben von Polyamidfasermaterialien, von Leder und insbesondere von cellulosehaltigem Fasermaterial. Nach den technisch üblichen Anwendungsverfahren, beispielsweise nach einer Methode der nachstehenden Anwendungsbeispiele, erhält man Färbungen und Drucke in klaren blauen Tönen von hohen Licht- und Nassechtheiten. Die Drucke zeichnen sich durch hohe Egalität, Farbstärke, Konturenschärfe und Reinheit des Weissfonds aus. Die Färbungen sind rein weiss ätzbar.

Beispiel 2

93,2 Teile der im obigen Beispiel 1 genannten Azo-Ausgangsverbindung werden, wie in Beispiel 1 beschrieben, zu einer neutralen Lösung gelöst und anschliessend mit 37,2 Teilen Cyanurchlorid bei einer Temperatur von 0-5°C versetzt. Man rührt das Reaktionsgemisch 2 bis 4 Stunden bei dieser Temperatur und einem pH-Wert von 5-6 weiter. Danach wird eine neutrale Lösung von 56,2 Teilen 1-Amino-4-(β-sulfatoäthylsulfonyl)-benzol in 200 Teilen Wasser hinzugegeben. Man rührt das Reaktionsgemisch einige weitere Stunden bei 30-40°C und bei einem pH-Wert von 6-7. Zur Bildung des Kupferkomplexes gibt man zur Reaktionslösung 23 Teile basisches Kupfercarbonat ($CuCO_3$ $Cu(OH)_2$) und rührt bei einem pH-Wert von 5 eine Stunde bei 60-70°C. Die erhaltene Lösung wird geklärt, das Produkt aus dem Filtrat durch Aussalzen mit Natriumchlorid isoliert.

Es wird ein elektrolythaltiges blauschwarzes Pulver erhalten, das die in Beispiel 1 genannte Kupferkomplexverbindung als Farbstoff enthält, der gleiche anwendungstechnische Eigenschaften wie das in Beispiel 1 beschriebene Produkt besitzt. Die Ausbeute ist dieselbe.

Beispiel 3

93,2 Teile der im Beispiel 1 genannten Aminoazoverbindung als Ausgangsverbindung werden in 750 Teilen Wasser suspendiert und mit 20 Teilen basischem Kupfercarbonat versetzt; die Kupferung erfolgt unter Rühren bei einem pH-Wert von 5-7 bei 60-70°C wähend 30 Minuten. Das Gemisch wird sodann auf 0-5°C abgekühlt, mit 103 Teilen des Kondensationsproduktes aus einem Mol Cyanurchlorid und einem Mol 4-(β-Sulfato-

äthylsulfonyl)-anilin versetzt und einige Stunden bei einem pH-Wert von 5-6 bei dieser Temperatur gerührt. Sodann wird das Reaktionsgemisch geklärt und das Filtrat zur Trockne eingedampft. Man erhält ein blauschwarzes, elektrolythaltiges Pulver mit der in Beispiel 1 angegebenen faserreaktiven Kupferkomplexverbindung als Farbstoff mit den gleichen guten anwendungstechnischen Eigenschaften in gleicher Ausbeute.

Beispiel 4

93,2 Teile der in Beispiel 1 als Ausgangsverbindung beschriebenen Aminoazoverbindung werden in 750 Teilen Wasser suspendiert und gemäss der Vorschrift des Beispieles 3 in die Kupferkomplexverbindung übergeführt. Das Reaktionsgemisch wird abgekühlt, mit 47 Teilen Cyanurchlorid versetzt und einige Stunden bei einem pH-Wert von 5 bis 6 und einer Temperatur von 0 bis 5°C gerührt. Sodann gibt man eine neutrale Lösung von 70 Teilen 3-(β-Sulfatoäthylsulfonyl)-anilin in 200 Teilen Wasser hinzu und rührt das Reaktionsgemisch bei einer Temperatur unterhalb von 10°C und einem pH-Wert von 6 bis 7 einige weitere Stunden nach. Es wird geklärt, die so hergestellte Kupferkomplexverbindung der Formel

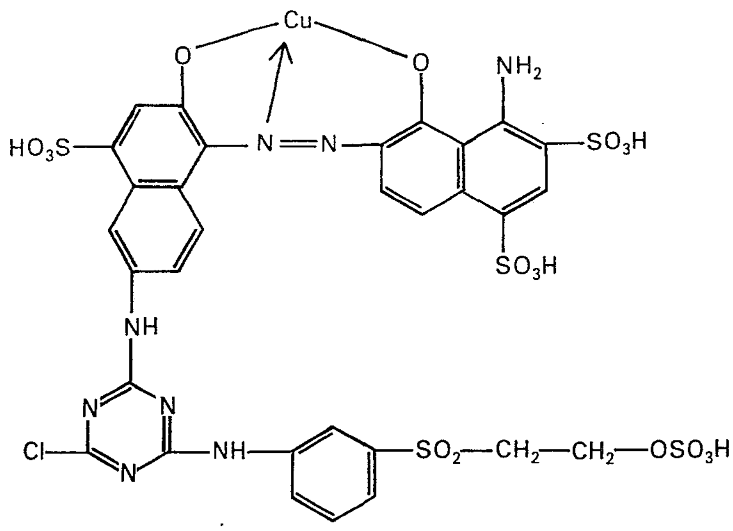

wird als Alkalisalz durch Sprühtrocknen oder durch Aussalzen mit Natriumchlorid oder Kaliumchlorid isoliert. Die Ausbeute beträgt etwa 80 bis 90%.

Das so erhaltene elektrolythaltige Farbstoffpulver färbt nach den für faserreaktive Farbstoffe üblichen Färbe- und Druckverfahren Fasermaterialien aus natürlichem oder synthetischem Polyamid oder aus Polyurethan, ebenso Leder, insbesondere aber Celulosefasermaterial in in kräftig blauen Farbtönen mit sehr guten Echtheits- und anwendungstechnischen Eigenschaften, insbesondere mit den in Beispiel 1 erwähnten.

Beispiele 5 bis 12

Verfährt man in analoger Weise nach einer der in den obigen Beispielen 1 bis 4 angegebenen Verfahrensvarianten zur Herstellung der erfindungsgemässen Kupferkomplex-Azoverbindungen und setzt hierzu die entsprechenden Säurechloride bzw. aromatischen Amine ein, die in den nachfolgenden Beispielen genannt sind, so erhält man die konstitutionell entsprechenden erfindungsgemässen Kupferkomplexverbindungen entsprechend der allgemeinen Formel (1), die sehr gute Fabstoffeigenschaften besitzen und Fasermaterialien, insbesondere Cellulosematerialien, in blauen Tönen mit sehr guten Echtheitseigenschaften färben:

| Bsp. | Arbeitsweise entspr. dem Ausführungsbsp. Nr. | Säurechlorid entspr. Formel (4) | Amin entspr. Formel (6) |
|---|---|---|---|
| 5 | 1 | 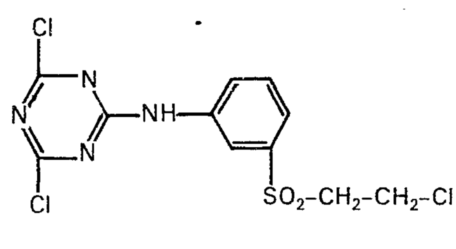 | ——— |

| Bsp. | Arbeitsweise entspr. dem Ausführungsbsp. Nr. | Säurechlorid entspr. Formel (4) | Amin entspr. Formel (6) |
|---|---|---|---|
| 6 | 1 | 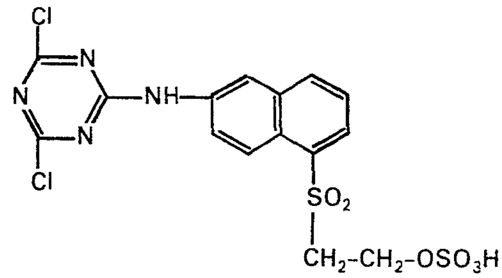 | ——— |
| 7 | 2 | ——— | 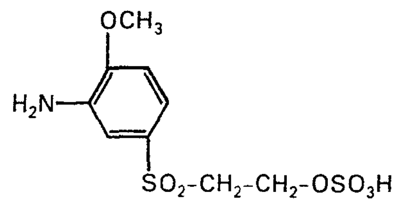 |
| 8 | 2 | ——— | 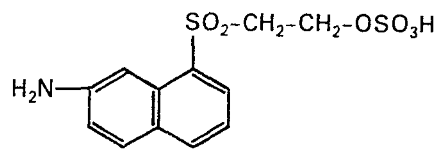 |
| 9 | 3 | 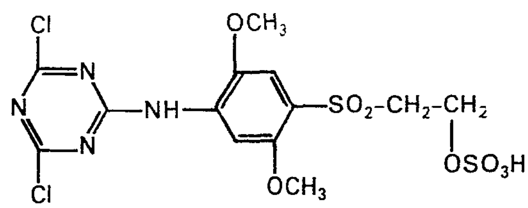 | ——— |
| 10 | 3 | 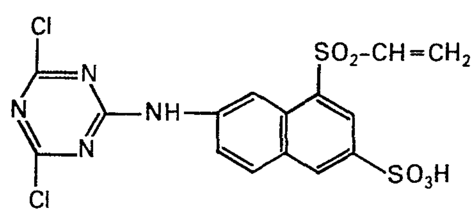 | ——— |
| 11 | 4 | ——— | 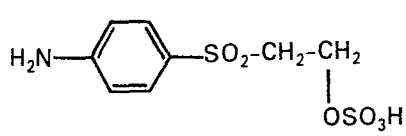 |
| 12 | 4 | ——— | 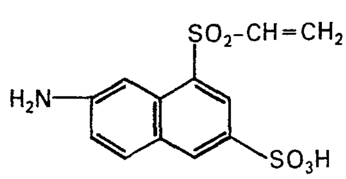 |

## Patentansprüche

1. Verbindungen der allgemeinen Formel (1)

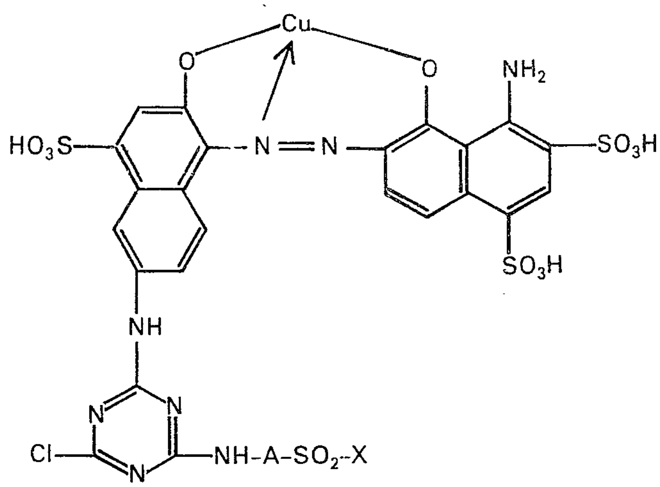

(1)

und deren Salze, in welcher bedeuten:

A den Phenylenrest, der durch 1, 2 oder 3 Substituenten aus der Gruppe Alkyl von 1-4 C-Atomen, Alkoxy von 1-4 C-Atomen, Chlor und Brom substituiert sein kann, oder den Naphthylenrest, der durch 1, 2 oder 3 Sulfonsäuregruppen substituiert sein kann;

X den Rest der Formel (2a) oder (2b)

$-CH{=}CH_2$ (2a)

$-CH_2-CH_2-Y$ (2b),

in welcher Y eine alkalisch eliminierbare Gruppe bedeutet.

2. Verfahren zur Herstellung der in Anspruch 1 genannten und definierten Verbindungen, dadurch gekennzeichnet, dass man eine metallfreie Azoverbindung der Formel (3), in Form der freien Säure geschrieben,

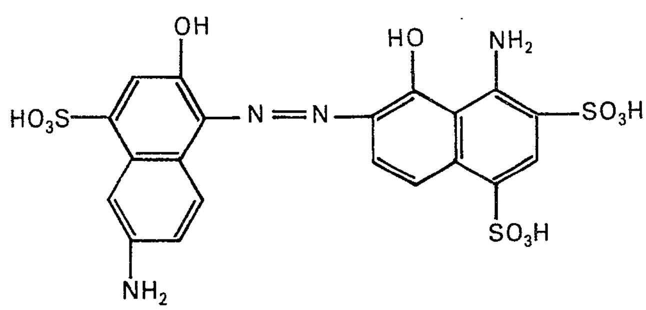

(3)

oder deren Kupferkomplexverbindung mit einer Dichlortriazin-Verbindung der allgemeinen Formel (4)

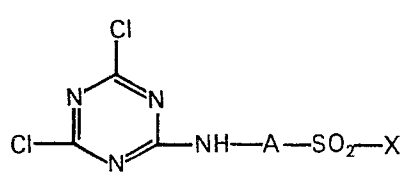

(4)

in welcher A und X die in Anspruch 1 genannten Bedeutungen haben, umsetzt und im Falle, dass von der metallfreien Verbindung der allgemeinen Formel (3) ausgegangen wurde, die erhaltene metallfreie Verbindung mit einem kupferabgebenden Mittel in die Kupferkomplexverbindung gemäss Anspruch 1 überführt, oder dass man eine metallfreie Azoverbindung der allgemeinen Formel (5), in Form der freien Säure geschrieben,

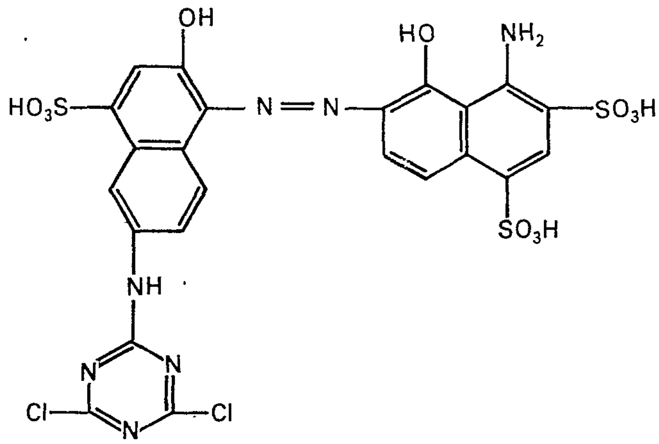

(5)

oder deren Kupferkomplexverbindung mit einem aromatischen Amin der allgemeinen Formel (6)

$H_2N\text{-}A\text{-}SO_2\text{-}X$ (6)

in welcher A und X die in Anspruch 1 genannten Bedeutungen haben, umsetzt und, falls man von der metallfreien Azoverbindung der allgemeinen Formel (5) ausgegangen ist, die erhaltene metallfreie Verbindung mit einem kupferabgebenden Mittel in die Kupferkomplexverbindung gemäss Anspruch 1 überführt.

3. Verwendung der in Anspruch 1 genannten und definierten Verbindungen als Farbstoffe.

4. Verwendung nach Anspruch 3 zum Färben und Bedrucken von Materialien aus Cellulosefasern und regenerierter Cellulose, von natürlichen oder synthetischen Polyamidfasern, von Polyurethanfasern und von Leder.

**Revendications**

1. Les composés de formule générale (1) ci-dessous

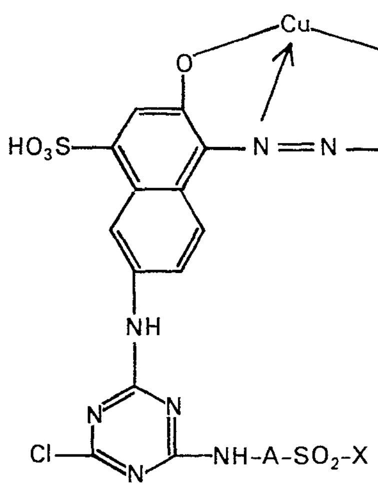

(1)

ainsi que leurs sels, formule dans laquelle:

A représente un radical phénylène pouvant avoir 1, 2 ou 3 substituants choisis parmi des alkyles en $C_1$-$C_4$, des alcoxy en $C_1$-$C_4$, le chlore et le brome, ou bien un radical naphtylène pouvant avoir 1, 2 ou 3 groupes sulfoniques; et

X représente un radical de formule (2a) ou (2b)

$-CH{=}CH_2$ (2a)

$-CH_2\text{-}CH_2\text{-}Y$ (2b),

Y étant un groupe éliminable par voie alcaline.

2. Procédé de préparation des composés selon la revendication 1, caractérisé en ce que l'on fait réagir le composé azoïque non métallisé de formule (3) ci-après, sous la forme de l'acide libre,

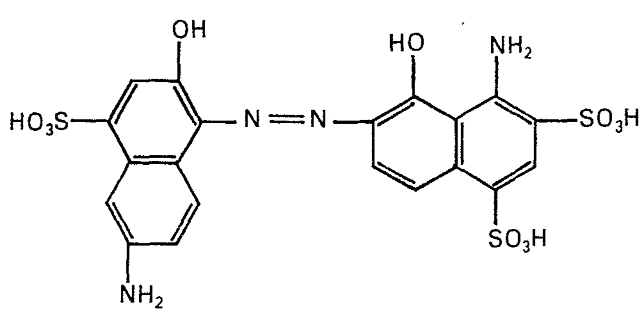

(3)

ou bien son complexe de cuivre, avec un composé dichlorotriazinique de formule générale (4)

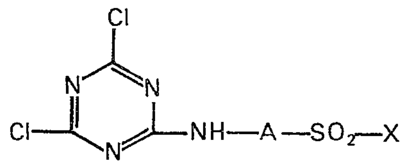

(4)

et si l'on est parti du composé non métallisé de formule (3), on transforme ensuite le composé non métallisé obtenu en son complexe de cuivre avec un agent cédant du cuivre, ou bien en ce que l'on fait réagir le composé azoïque non métallisé de formule (5)

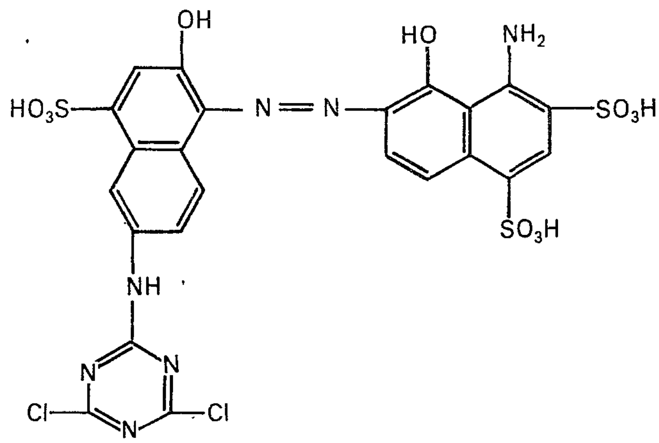

(5)

sous la forme de l'acide libre, ou bien son complexe de cuivre, avec une amine aromatique de formule générale (6)

$H_2N-A-SO_2-X$ (6)

et si l'on est parti du composé azoïque non métallisé de formule (5), on transforme ensuite le composé non métallisé obtenu en son complexe de cuivre avec un agent cédant du cuivre.

3. L'utilisation comme colorants des composés définis à la revendication 1.

4. L'utilisation selon la revendication 3 pour la teinture et l'impression de matières en fibres cellulosiques et cellulose régénérée, de fibres de polyamides naturels ou synthétiques, de fibres de polyuréthanes et du cuir.

**Claims**

1. Compounds of the general formula (1)

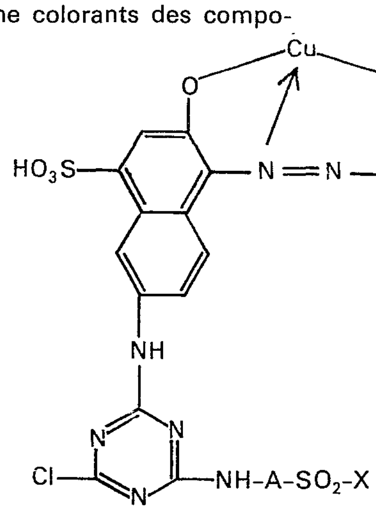

(1)

and the salts thereof, wherein

A is the phenylene radical which may be substituted by 1, 2 or 3 substituents from the group of alkyl of 1 to 4 C-atoms, alkoxy of 1 to 4 C-atoms, chlorine and bromine, or is the naphthylene radical which may be substituted by 1, 2 or 3 sulfonic acid groups,

X is the radical of the formula (2a) or (2b)

$-CH=CH_2$ (2a)

$-CH_2-CH_2-Y$ (2b)

in which Y is a group which can be eliminated by alkali.

2. Process for the preparation of the compounds mentioned and defined in claim 1, characterized by that a metal-free azo compound of the formula (3) – which is drawn in form of the free acid –

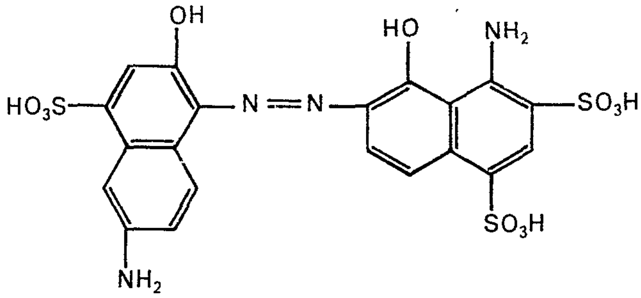

(3)

or a copper complex compound thereof is reacted with a dichloro-triazine compound of the general formula (4)

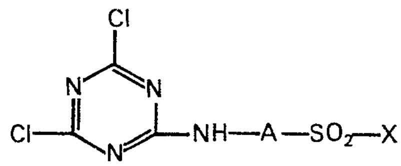

(4)

in which A and X have the meanings mentioned in claim 1, and in the case that the metal-free compound of the general formula (3) has been used as starting compound, the metal-free compound obtained is converted to the copper complex compound according to claim 1 by means of a copper-delivering agent, or that a metal-free azo compound of the general formula (5) - drawn in form of the free acid -

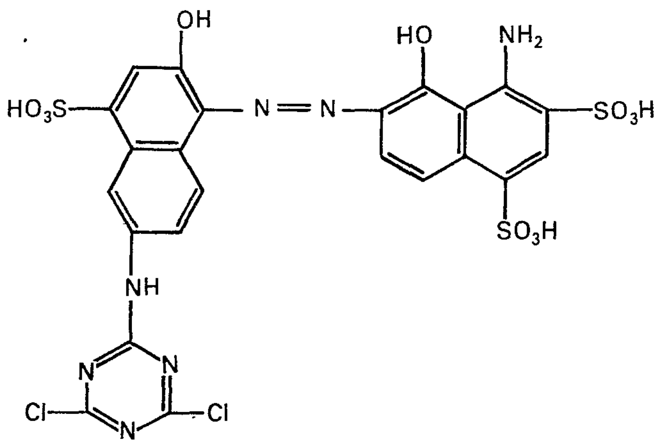

(5)

or the copper complex compound thereof is reacted with an aromatic amine of the general formula (6)

$H_2N\text{-}A\text{-}SO_2\text{-}X$ (6)

in which A and X have the meanings mentioned in claim 1, and in the case that the metal-free azo compound of the general formula (5) has been used as starting compound, the metal-free compound obtained is converted to the copper complex compound according to claim 1 by means of a copper-delivering agent.

3. Use of the compounds mentioned and defined in claim 1, as dyestuffs.

4. Use according to claim 3 for dyeing and printing materials of cellulose fibers and regenerated cellulose, of natural or synthetic polyamide fibers, of polyurethane fibers and of leather.